# EUROPÄISCHE PATENTSCHRIFT

(11) **EP 2 449 871 B1**
(45) Veröffentlichungstag und Bekanntmachung des Hinweises auf die Patenterteilung: **12.12.2018**
(21) Anmeldenummer: 11008603.0
(22) Anmeldetag: 27.10.2011
(51) Int. Cl.: A01C 9/02

(54) **Kartoffellegevorrichtung**
Potato positioning device
Dispositif de pose de pommes de terre

(30) Priorität: 05.11.2010 DE 102010050616
(43) Veröffentlichungstag der Anmeldung: 09.05.2012
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Wischmeyer, André

(56) Entgegenhaltungen:
- EP-A1- 2 047 736
- WO-A1-2006/087298
- DE-C- 331 981
- US-A- 2 053 390
- US-A- 3 690 511
- US-A- 4 008 826

## Beschreibung

Die Erfindung betrifft eine Legevorrichtung für Kartoffeln gemäß dem Oberbegriff des Anspruchs 1.

Legemaschinen für Knollenfrüchte, insbesondere Kartoffeln, sind seit langem bekannt, wobei in AT 339 649 (1975) ein von einem Schlepper o. dgl. gezogenes System gezeigt ist, bei dem ein als Fülltrichter ausgebildeter Vorratsbehälter mit einem in Fahrtrichtung vorderen Schaufelrad zusammenwirkt, so dass aus dem Vorratsbehälter mittels einer Förderrutsche zugeführte Knollen in den Bereich eines Mitnahmerades gelangen und von diesem aus in das Saatbeet abgelegt werden. Diese Konstruktion mit dem in Fahrtrichtung hinten liegenden Vorratsbehälter weist Stabilitätsprobleme insbesondere dann auf, wenn der Vorratsbehälter mit einer größeren Menge von Saat-Knollen gefüllt ist. Deshalb weist diese Legemaschine ein oder mehrere Stützräder zur bodenseitigen Führung auf. Bei einer Lösung gemäß DE 331 981 (1918) greift ein Schöpfrad in einen Vorratskasten ein und übergibt die erfassten Knollen einem Förderrohr zum Verlegen in Pflanzlöcher.

Auch bei einer Konstruktion gemäß US 3,690,511 (1972) ist eine unmittelbar durch den Vorratsbehälter hindurch geführte Schöpfkette mit Becherförderern vorgesehen, so dass die mehrfach umgelenkte Schöpfkette aus dem einteiligen Vorratsbehälter im rückseitigen Bereich die Knollen entnehmen kann und diese im vorderen Bereich der auf Stützrädern bewegbaren Legemaschine in eine hier geformte Furche einlegbar sind. Diese Legemaschine ist eine integrierte Spezialmaschine, da der Vorratsbehälter nur in Kombination mit der aufwendig gestalteten Schöpfkette verwendet werden kann. Ein weitgehend autark anschließbares Legeaggregat ist hier im Bereich des Vorratsbehälters nicht vorgesehen.

Bei einer Kartoffellegemaschine gemäß DE 29 00 985 wird am in Fahrtrichtung vorderen Ende eines Vorratsbehälters ein mit gattungsgemäßen Schöpfbechern versehenes Legeaggregat so angeordnet, dass aus dem Vorratsbehälter in Fahrtrichtung ausgeförderte Knollen direkt in den Bechern übernommen und am Ende des Ausfördertrums in das Saatbeet abgelegt werden. Bei diesem Aggregat ist zwar die Festlegung an einer Dreipunkthalterung eines Schleppers vorgesehen, jedoch bewirkt der in Fahrtrichtung weit nach hinten versetzte Vorratsbehälter nachteilige Instabilitäten bei hohem Ladevolumen bzw. wird der Vorratsbehälter in seiner Aufnahmekapazität nachteilig eingeschränkt, so dass häufiges Nachfüllen erforderlich wird. Eine der vorbeschriebenen Konstruktion entsprechende Ausführung der Kartoffellegemaschine ist in DE 94 01 110.9 U1 gezeigt, und auch bei einer Legemaschine gemäß DE 195 41 553 A1 schließt der Schöpfbereich des Legeaggregates unmittelbar an den nachgeordneten Vorratsbehälter an, jedoch können diese Systeme durch zusätzliche Stützräder größere Mengen von Knollen aufnehmen.

Bei einer Legemaschine für Kartoffeln gemäß DE 197 10 036 C2 wird der Vorratsbunker zwar rückseitig mit einem Kippbunker kombiniert, aber das in Fahrtrichtung vordere Legeaggregat greift wiederum unmittelbar in den Vorratsbunker ein, und damit wird eine nachteilig lang bauende Konstruktion ähnlich der vorhergehenden Ausführungen erreicht.

Bei einer kombinierten landwirtschaftlichen Maschine gemäß DE 20 2006 020 531 U1 ist der Vorratsbehälter im Nahbereich des vorderen Schleppers an dem ein Stützrad aufweisenden Tragrahmen abgestützt, und das Legeaggregat greift ebenfalls unmittelbar endseitig in den Vorratsbehälter ein. Daraus resultiert, dass die vereinzelten Knollen in der Ablegephase im Saatbeet in einer in Fahrtrichtung weit nach hinten versetzten Position und nachteiligem Bewegungsimpuls ausgefördert werden. Damit ist die Positioniergenauigkeit für die Knollenlage nachteilig beeinflusst. Bei dieser Konstruktion ist eine die Länge vergrößernde und die Stabilität verringernde Aneinanderreihung von Behälter und Legeaggregat vorgesehen, wobei der Vorratsbehälter mit sich in Fahrtrichtung des Schleppers im wesentlichen vor den Legeaggregaten erstreckenden Förderern versehen ist, so dass hier die Knollen direkt aus dem Vorratsbehälter in die Legeaggregate eingefördert werden.

Bei einer Kartoffellegemaschine nach US 2,053,390 werden Kartoffeln in einer in Fahrtrichtung der Legemaschine hinter einer Legevorrichtung angeordneten Vereinzelungseinrichtung vereinzelt und durch die Legevorrichtung abgelegt. Eine derartige Maschine sieht eine manuelle Überwachung des Legevorgangs vor.

US 4,008,826 zeigt eine Kartoffellegemaschine mit einem in Fahrtrichtung vor dem Legeaggregat angeordnetem Vorratsbehälter. Die Kartoffel werden über ein Förderband aus dem Vorratsbehälter zu dem Legeaggregat geführt, das die zugeführten Kartoffeln übernimmt und gegen die Fahrtrichtung ablegt.

Bei einer Konstruktion mit einer Legemaschine für Kartoffeln gemäß DE 10 2007 030 448 A1 wird von einer Basis-Konstruktion im Bereich von optimal wirkenden Legeaggregaten ausgegangen, bei der im Bereich des Legeaggregates eine genaue Positionierung der Knollen entgegen der Fahrtrichtung bzw. - unter Beachtung der Fahrgeschwindigkeit - senkrecht zu dieser erfolgt. Diese Konstruktion mit dem optimal überwachbaren Legeaggregat ist jedoch mit einem in Fahrtrichtung weit nach hinten abragenden Vorratsbehälter kombiniert, so dass ein entsprechend großes Gesamtaggregat zu bewegen ist, dieses als "gezogene" Ausführung ein Stützrad erfordert und damit in seinem Anwendungsumfang eingeschränkt ist.

Die Erfindung befasst sich mit dem Problem, eine Kartoffellegevorrichtung zu schaffen, bei der bisher vorgesehene Legeaggregate weitgehend ohne konstruktive Änderungen auch für Maschinen mit in Fahrtrichtung vor dem Legeaggregat befindlichen Vorratsbehältern einsetzbar sind, dabei eine gewichtsoptimale Konstruktion mit verbesserter Steuerung auch als Aushubgerät möglich ist und im Nahbereich des Tragrahmens Freiräume für Zusatzaggregate geschaffen werden.

Die Erfindung löst diese Aufgabe mit einer Kartoffellegevorrichtung mit den Merkmalen des Anspruchs 1. Hinsichtlich weiterer Ausgestaltungen wird auf die Ansprüche 2 bis 10 verwiesen.

Die Vorrichtung zum Legen von Kartoffeln ist mit einem Tragrahmen versehen, auf dem ein Vorratsbehälter mit sich in Fahrtrichtung des Schleppers vor den Legeaggregaten erstreckendem Füllbereich so gehalten ist, dass damit eine für unterschiedliche Schlepper-Bedingungen optimale Gewichtsbelastung des Systems erreicht werden kann. Die erfindungsgemäße Verbesserung des einen vergleichsweise weiter nach vorn verlagerbaren Schwerpunkt der Vorrichtung ermöglichenden Konzeptes sieht vor, dass ausgehend von einem vorgeordneten Vorratsbehälter die jeweiligen mit diesem zusammenwirkenden und diesem nachgeordneten Legeaggregate weiterhin von ihrem rückseitigen Bereich aus mit den Knollen versorgt werden und gleichzeitig der Vorratsbehälter vorteilhaft nahe dem Schlepper festlegbar ist.

Damit wird eine - in Ansehung des Standes der Technik - überraschend verbesserte Kartoffellegevorrichtung konzipiert, bei der einerseits eine insbesondere für eine Dreipunkthalterung an einem Schlepper optimierte Gewichtsverteilung möglich ist und andererseits für die auch für andere Konzepte von Legemaschinen geeigneten, weitgehend konstruktionsgleichen Legeaggregate ein zweites Anwendungsgebiet ohne speziellen Anpassungsaufwand erreicht wird. Damit können die baugleichen Legeaggregate - in einer für deren Herstellung vorteilhaft hohen Stückzahl - sowohl für "gezogene" als auch "gehobene" Tragrahmen an Legemaschinen eingesetzt werden.

Zur Realisierung dieses die bisherigen Anwendungsfälle erweiternden neuen Maschinen-Konzeptes ist vorgesehen, dass im Bereich der Legeaggregate jeweils zumindest ein deren Rückseite zumindest bereichsweise umgebender Übernahmeraum ausgebildet wird, so dass von diesem aus die Knollen vereinzelt und dem Saatbeet zugeführt werden können. Diese neuartige Anordnung erfolgt dabei derart, dass nunmehr der Vorratsbehälter nicht mehr - in Fahrtrichtung - direkt hinter dem Legeaggregat angeordnet ist. Vielmehr ist nunmehr eine indirekte Befüllung der Becher vorgesehen, da in deren Bereich ein als "Zwischenlager" wirkender rückseitiger Übernahmeraum wirksam ist.

Für die erfindungsgemäße Verlagerung der Knollen in den Übernahmeraum hinein sind unterschiedliche konstruktive Baugruppen denkbar, wobei ausgehend von einer einfachen Rutsche o. dgl. Leitelement auch entsprechende Förderbänder, Förderschächte o. dgl. angetriebene Organe aufweisende Baugruppen denkbar sind. Dabei ist es auch möglich, die Knollen bereits während der Überführung in den Übernahmeraum unter Ausnutzung eines Vereinzelungselementes so "aneinanderzureihen", dass damit die verlegegerechte Erfassung durch die an sich bekannten Vereinzelungsorgane des Legeaggregates optimiert werden kann, hier insbesondere die Kontrolle der Vereinzelung der Knollen weiter verbessert wird und damit Fehlbelegungen bei der Entnahme aus dem Übernahmeraum vermieden werden.

Mit dieser neuen Grundanordnung des Konzeptes wird deutlich, dass ausgehend von der Gebrauchslage des Systems - in Fahrtrichtung gesehen - sich das jeweilige Legeaggregat nunmehr im wesentlichen zwischen dem sich schlepperseitig erstreckenden Vorratsbehälter und einem rückseitig dem Legeaggregat zugeordneten Übernahmeraum befindet. Ausgehend von dieser "Zwischenordnung" - mit dem zum rückseitigen Übernahmeraum vorgesehenen Förderer, beispielsweise einem Förderband - ist die Anwendung der bereits in DE 10 2007 030 448 A1 als optimal herausgestellten Becher-Legeaggregate sowohl für gezogene Ausführungen von Legemaschinen als auch für eine an sich bekannte "gehobene" Variante (DE 29 00 985) möglich. Dabei kann jeweils ein optimaler Verlegevorgang genutzt werden, bei dem die Knollen beim Ablegen im Saatbeet zumindest phasenweise eine entgegen der Fahrtrichtung gerichtete Einlegebewegung aufweisen.

Mit Blick auf an sich bekannte mehrreihige Legemaschinen sieht auch die erfindungsgemäße Kartoffellegevorrichtung vor, dass in deren Querrichtung ein vorteilhaft nahe dem Zugfahrzeug auf dem Tragrahmen abgestützter Vorratsbehälters vorgesehen ist und ausgehend von diesem mehrere der Legeaggregate bedienbar sind.

Dabei ist vorgesehen, dass mittels des mit dem Übernahmeraum zusammenwirkenden Förderers jeweils zwei Legeaggregate mit Knollen beschickt werden. Dabei können die kontinuierlich auf dem Förderer zugeführten Knollen im Bereich eines Teilers in die nebeneinander liegenden Teilbereiche des jeweiligen Übernahmeraumes eingeleitet werden. Ebenso ist denkbar, für jeden der Übernahmeräume einen separaten Förderer vorzusehen und diesen mit entsprechenden Steuerungen und Überwachungsorganen zu versehen.

Die erfindungsgemäße Kombination des vorn oben - nahe dem Zugfahrzeug - positionierten Vorratsbehälters mit dem nach hinten gerichteten Förderer zum Übernahmeraum und dem Verlegeaggregat führt zu einer optimal zusammenwirkenden Einheit und schafft die Möglichkeit, dass zumindest bereichsweise unterhalb des vorderseitigen Vorratsbehälters zusätzliche Bearbeitungsgeräte positionierbar sind. Dieser Raum unterhalb dem Vorratsbehälter wird zwar auch bei bekannten Maschinen (DE 20 2006 020 531 U1) genutzt, aber erst mit dem erfindungsgemäßen System aus Behälter-Förderer-rückseitige Befüllung ist eine kompakte Konstruktion realisierbar, bei der mehrere als Bearbeitungssatz zusammenwirkende Geräte unterhalb eines vergleichsweise großen Vorratsbehälters angeordnet werden. Gleichzeitig ist der vom Legeaggregat erreichbare Ablagepunkt für die Knollen optimal nahe dem Schwerpunkt des Systems, so dass optimale Setzbedingungen erreicht werden.

Außerdem kann eine mit Blick auf den Schwerpunkt des Systems gewichtsoptimale Auslegung der Konstruktion erreicht werden, bei der auch die Möglichkeiten der Steuerung der Vorrichtung weiter verbessert sind. Die insgesamt kompakte Ausführung dieses Systems ermöglicht eine Vielzahl von Steuerungs- und Überwachungsvarianten, wobei diese bereits vorteilhaft im Bereich der Dreipunkthalterung im Verbindungsbereich zum Schlepper - beispielsweise im Bereich des hydraulischen Krafthebers - realisiert werden können und auch das Legeaggregat bzw. der Furchenzieher bzw. der Dammformer mit entsprechenden Sensoren zusammenarbeiten können. Dabei sind insbesondere Anpassungen der Vorrichtung an sich ändernde Beladezustände und/oder wechselnde Bodenstrukturen auf der Auslegefläche denkbar, derart, dass für die vom Legeaggregat erfassten Knollen eine optimale Ablageposition vorgebbar bzw. ansteuerbar ist.

Weitere Einzelheiten und vorteilhafte Ausgestaltungen der Erfindung ergeben sich aus der nachfolgenden Beschreibung, in der ein Ausführungsbeispiel der erfindungsgemäßen Kartoffellegevorrichtung veranschaulicht ist. In der Zeichnung zeigen:
- Fig. 1: eine Seitenansicht der erfindungsgemäßen Kartoffellegevorrichtung in Gebrauchslage an einer Dreipunkthalterung eines schematisch dargestellten Schleppers,
- Fig. 2: eine geschnittene Seitenansicht der Kartoffellegevorrichtung gemäß einer Linie II-II in Fig. 3,
- Fig. 3: eine Draufsicht der Kartoffellegevorrichtung gemäß Fig. 1, und
- Fig. 4: eine Prinzipdarstellung der Knollenbewegung in den einzelnen Baugruppen in Seitenansicht.

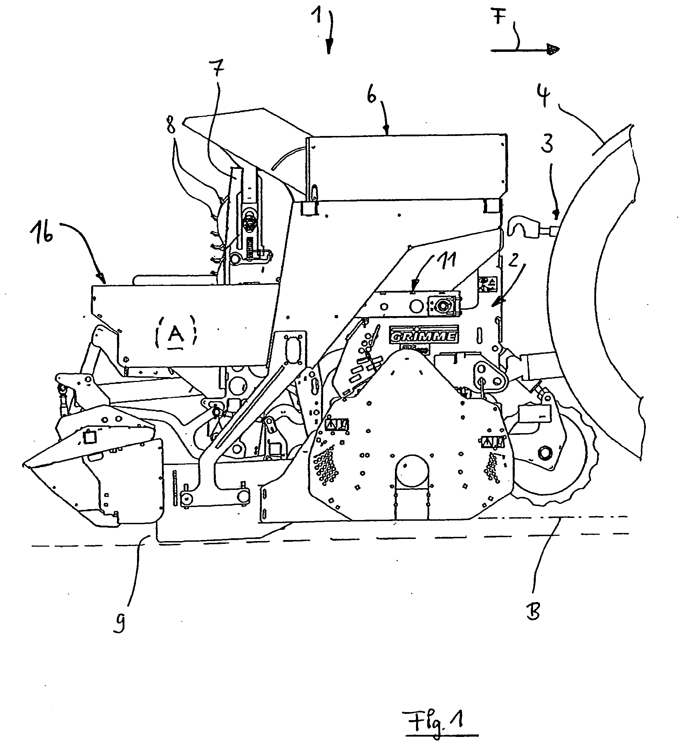

In Fig. 1 ist eine insgesamt mit 1 bezeichnete Kartoffellegevorrichtung in einer Seitenansicht dargestellt, wobei deren Tragrahmen 2 an einer Dreipunkthalterung 3 eines schematisch dargestellten Schleppers 4 abgestützt ist. Damit kann die Vorrichtung 1 insgesamt mittels eines nicht näher dargestellten hydraulischen Krafthebers 5 - beispielsweise in Relation zu einer Horizontalebene B - verlagert werden (nicht dargestellt). Diese Konstruktion wird gattungsgemäß als ein am Heck getragenes Aushebeaggregat bezeichnet (DE 197 10 036), von dem sich die gezogene Ausführung (EP 2 047 736) unterscheidet.

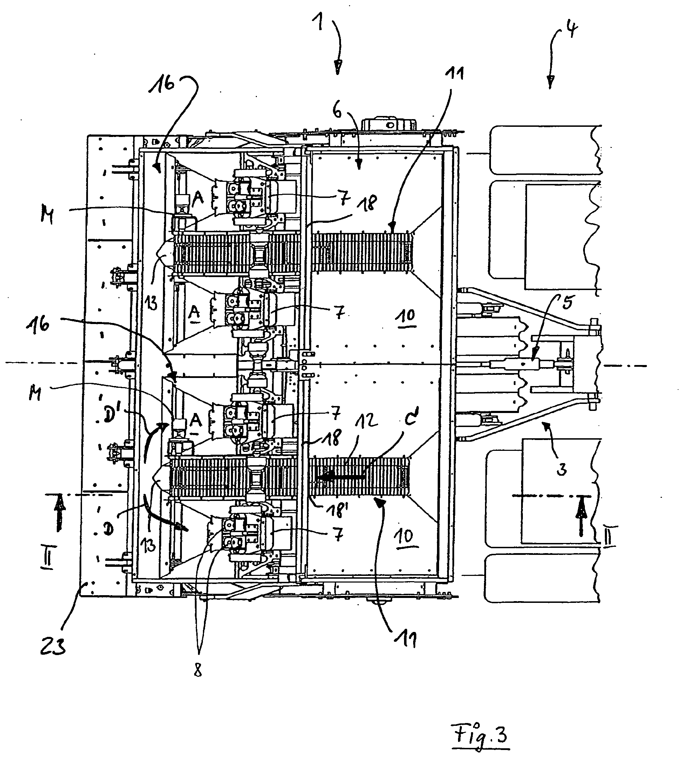

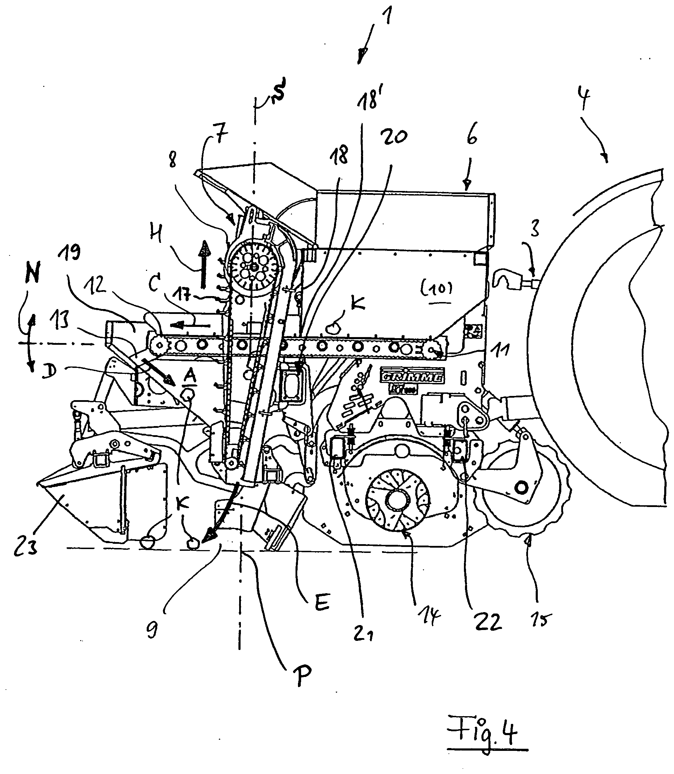

Derartige Vorrichtungen zum Verlegen von Kartoffeln sind mit einem insgesamt mit 6 bezeichneten Kartoffelvorratsbehälter versehen. Mit diesem Kartoffelvorratsbehälter 6 wirkt zumindest ein Legeaggregat 7 zusammen, in dessen als umlaufender Bechergurt o. dgl. Vereinzelungsorgan ausgebildete Baugruppe die Knollen K (Fig. 4) übernommen und in ein vorbereitetes Saatbeet 9 ausgelegt werden. Bekannt sind außerdem Konstruktionen, bei denen der Vorratsbehälter 6 einen sich in Fahrtrichtung F des Schleppers 4 im wesentlichen vor den Legeaggregaten 7 erstreckenden Füllbereich 10 (Fig. 3) aufweist.

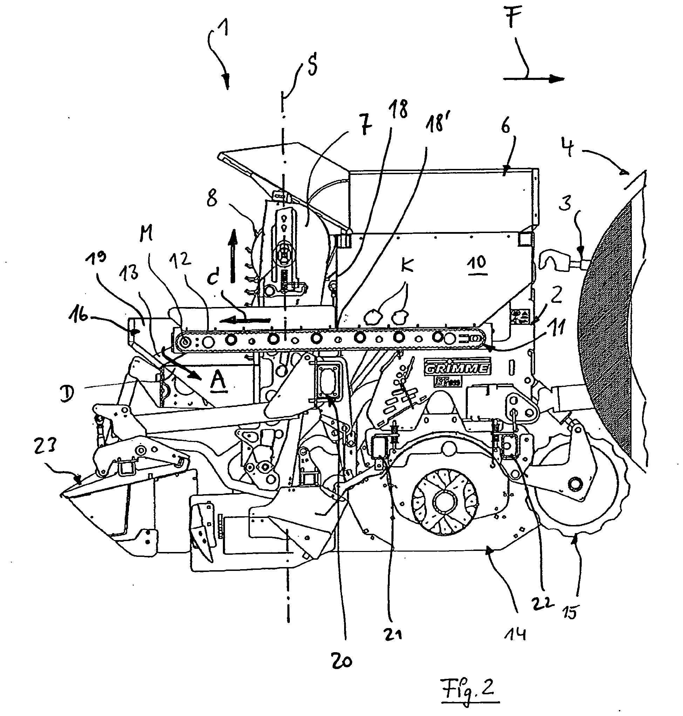

Das erfindungsgemäße Konzept der Kartoffellegevorrichtung 1 sieht vor, dass bei dieser die den Vorratsbehälter 6 verlassenden Knollen K (Fig. 2) zumindest einem der Legeaggregate 7 im jeweils - in Bezug auf die Fahrtrichtung F - rückseitigen Bereich zuführbar und erst hier von den Vereinzelungsorganen 8 übernehmbar sind. Diese Zuführung kann dabei mit weitgehend variabel ausführbaren Leit- und/oder Fördermitteln ausgeführt werden, und ebenso ist denkbar, dass bei der Zuführung in den rückseitigen offenen Bereich auch eine unmittelbare Einleitung in die Vereinzelungsorgane des Legeaggregates 7 erfolgt (nicht dargestellt).

In der dargestellten Ausführung der Legevorrichtung 1 ist diese im Bereich der Legeaggregate 7 jeweils mit zumindest einem, deren Rückseite zumindest bereichsweise umgebenden Übernahmeraum A versehen. Mit diesem Übernahmeraum A wird gleichzeitig eine die Einbaulage des Legeaggregates 7 vorgebende Position definiert, so dass die Knollen K nicht mehr direkt am Ausgang des Vorratsbehälters 6 von den Vereinzelungsorganen 8 übernommen, sondern auf einem "Umweg" - z. B. auf einer entsprechenden Leit- oder Förderbahn - zu bewegen sind und danach bis in das Saatbeet transportiert werden können.

Aus der Seitenansicht gemäß Fig. 2 wird deutlich, dass ausgehend von der Gebrauchslage des Systems - in Fahrtrichtung F gesehen - sich die jeweiligen Legeaggregate 7 bzw. deren vertikale Stützebene S im wesentlichen zwischen dem sich schlepperseitig erstreckenden Vorratsbehälter 6 sowie dem rückseitig dem Legeaggregat 7 zugeordneten Übernahmeraum A befindet. Damit wird gleichzeitig erreicht, dass sich der oben liegende Vorratsbehälter 6 vor einem vom Legeaggregat 7 definierten Anlagepunkt P erstreckt und diese für den exakten Verlegevorgang entscheidende Zone damit in einem optimalen Wirkbereich der Vorrichtung 1 positioniert ist.

Zur Realisierung der Zufuhr in den Übernahmeraum A ist der Vorratsbehälter 6 mit einer allgemein mit 11 bezeichneten Zuführbaugruppe versehen. Aus der Draufsicht gemäß Fig. 3 wird deutlich, dass zum Zuführen der Knollen K in den bzw. die rückseitigen Übernahmeräume A zumindest ein Förderer 12 vorgesehen ist. In der dargestellten Ausführung greift der Förderer 12 in den Füllbereich 10 des Vorratsbehälters 6 bodenseitig ein, so dass von dort aus die Knollen K gemäß einer Pfeilrichtung C bis hinter das "zwischen geordnete" Legeaggregat 7 bzw. hinter dessen Hochachse S verlagert werden. Aus dem Übernahmeraum A heraus werden die Knollen im ersten Fördertrum des Becher-Bandes 8 vereinzelt hochgefördert (Pfeil H) und dann im zweiten Fördertrum abwärts bewegt (Pfeil E). Damit wird deutlich, dass der Übernahmeraum A vorteilhaft nach Art eines Zwischenlagerbehälters 16 ausgebildet werden kann. Darin ist ein Teilvolumen der Knollenmenge speicherbar und von dem Bechern 17 des Bandes 8 übernehmbar.

Durch diese erfindungsgemäße Kombination eines Förderers 12 mit dem rückseitig dem Legeaggregat zugeordneten Übernahmeraum A wird erreicht, dass die aus dem Übernahmeraum A mittels jeweiliger Becher-Förderer 8 übernommenen Knollen K beim Ablegen im Saatbeet 9 zumindest phasenweise eine entgegen der Fahrtrichtung F gerichtete Einlegebewegung E aufweisen (Fig. 4) und damit das aus DE 10 2007 030 448 A1 als optimal erkannte Verlegeprinzip mit vorteilhaft jeweils konstruktionsgleichen Legeaggregaten 7 in unterschiedlichen Maschinen-Typen mit "gehobener" oder "gezogener" Ausführung realisiert werden kann.

Ausgehend vom Vorratsbehälter 6 ist vorgesehen, dass die Zuführbaugruppe 11 mit einem Förderer 12 eine rückseitige Trennwand 18 (Fig. 3) in einem Auslassbereich 18' durchgreift bzw. untergreift und dabei der Förderer 12 im Bereich einer oberen Öffnungszone 19 (Fig. 2) in den Übernahmeraum A geführt ist.

Resultierend aus der an sich bekannten mehrreihigen Ausführung derartiger Kartoffellegevorrichtungen 1 wird aus der Draufsicht gemäß Fig. 3 deutlich, dass in Querrichtung des Vorratsbehälters 6 zwischen jeweils zwei Legeaggregaten 7 ein mit den beiden benachbarten Übernahmeräumen A eines jeweiligen Behälters 16 zusammenwirkender Förderer 12 vorgesehen ist. Die mittels des Förderers 12 als kontinuierlicher Strom nachgeförderten Knollen K gelangen zu einem endseitig am Förderer 12 vorgesehenen Teiler 13, so dass beide Übernahmeräume A entsprechend kontinuierlich füllbar sind (Pfeil D, D'). In der dargestellten Ausführung der Kartoffellegevorrichtung 1 sind an den gemeinsamen Tragrahmen 2 insgesamt vier Legeaggregate 7 mit zwei diesen paarweise zugeordneten Förderern 12 vorgesehen.

Dieses Befüll-System kann dabei im Bereich der jeweilige Antriebsorgane bzw. -motoren M aufweisenden Förderer 12 auch so gesteuert werden, dass wahlweise eines der Legeaggregate 7 außer Betrieb gesetzt wird und damit bodenseitig bei B ein Dammprofil nach Art einer "Leer-Spur" erzeugt wird, in der keine Saat-Knollen K enthalten sind. Dieser Bodenbereich kann später als eine Rollspur für Stützräder von Pflanzenschutzmittel o. dgl. ausbringenden Geräten genutzt werden. Ebenso ist denkbar, im Bereich des bzw. der Teiler(s) 13 verstellbare Leitbleche o. dgl. Führungsteile vorzusehen, so dass der die Umlenkphasen D, D' bewirkende Teiler 13 in einer Richtung gesperrt oder der Förderstrom umgelenkt werden kann (nicht dargestellt), so dass damit beispielsweise einer der zugeordneten zwei Übernahmeräume A nicht befüllt wird.

Zur weiteren Verbesserung des weitgehend automatisierten Legevorgangs ist in Ansehung des zusätzlichen Längs-Förderers 12 vorgesehen, eine sensorische Überwachung der optimalen Förderlage in das System zu integrieren. Damit können dann insbesondere Neigungsbewegungen gemäß Pfeil N (Fig. 4) erfasst und im Bereich entsprechender Stellorgane korrigierende Verlagerungen der gesamten Vorrichtung und/oder Neigungsverstellungen des Förderers 12 aktiviert werden. Ebenso ist denkbar, weitere Sensoren in das System zu integrieren, mit denen insbesondere auch die Förderbewegung C und der Füllzustand des Übernahmeraumes A kontrolliert werden.

Bei der dargestellten Ausführung des Vorratsbehälters 6 ist dieser so aufgebaut, dass der Förderer 12 den bodenseitigen Auslass für den Füllbereich 10 bildet und damit unterhalb dieses Verbindungsbereiches ein Freiraum geschaffen wird. Das Maschinen-Konzept sieht vor, dass auch eine komplexe Bodenbearbeitung - vor dem eigentlichen Legevorgang bei 7 - in das System zu integrieren ist. Dazu kann der Bereich vor den Legeaggregaten 7 bzw. der Bereich unterhalb des vorderseitigen Vorratsbehälters 6 genutzt werden. In diesem "Freiraum" können trotz der Installation der Förderer 12 jeweilige Bodenbearbeitungsgeräte 14, 15 - in unterschiedlicher Kombination - angeordnet werden. Dazu ist ein horizontaler Querträger 20 des Tragrahmens 2 optimal zwischen Legeaggregat 7 und Vorratsbehälter 6 angeordnet, und die Geräte-Kombination 14, 15 wird zusätzlich zur Verbindung zum Tragrahmen 2 mittels jeweiliger Tragbalken 21, 22 gehalten. Damit wird deutlich, dass die erfindungsgemäße Konstruktion ein System umfasst, bei dem Bodenbearbeitung, Legen und Dammformen (bei 23) in einer optimierten Abfolge mittels einer kompakten Einheit durchführbar sind. Durch die erfindungsgemäße Lösung mit in "üblicher" Anbau- bzw. Montagevariante - an der Rückseite des nahe am Schlepper 4 befindlichen Vorratsbehälters 6 - angeordneten Legeelementen bzw. -aggregaten 7 wird für eine "getragene Kombi-Legemaschine" eine überraschende Verbesserung der Verlegepräzision erreicht.

Denkbar ist auch, an Stelle dieser Bodenbearbeitungsgeräte 14, 15 den Vorratsbehälter 6 bis zu diesem Bereich hin nach unten zu vergrößern, so dass die Ladekapazität des Systems insgesamt vergrößert ist und die Anzahl der Nachfüllvorgänge vorteilhaft reduziert werden kann. Es versteht sich, dass mit dem entsprechend vergrößerten Vorratsbehälter (nicht dargestellt) dann auch der Förderer 12 eine konstruktive Anpassung aufweist.

Mit der Ausführungsform gemäß Fig. 1 bis Fig. 4 ist eine aus Vorratsbehälter 6, Förderer 12 und Legeaggregat 7 mit Übernahmeraum A gebildete Einheit gezeigt, die mit dem Tragrahmen an der Dreipunkthalterung 3 angreift. In einer denkbaren Ausführung ist vorgesehen, dass die Baueinheit auch mit einem Tragrahmen versehen sein kann, der mittels einer Stützräder aufweisenden Zugbaugruppe an einem Schlepper anhängbar ist (nicht dargestellt), so dass eine insgesamt kompakte Anhänger-Variante (ähnlich DE 10 2007 030 448 A1) realisiert ist.

## Patentansprüche

1. Kartoffellegevorrichtung mit einem Tragrahmen (2), an dem zumindest ein Kartoffelvorratsbehälter (6) und aus diesem die Knollen (K) übernehmende sowie in jeweils vorbereitete Saatbeete (9) ausfördernde Legeaggregate (7) mit umlaufendem Bechergurt o. dgl. Vereinzelungsorganen (8) vorgesehen sind, wobei der Vorratsbehälter (6) einen sich in Fahrtrichtung (F) des Schleppers (4) im wesentlichen vor den Legeaggregaten (7) erstreckenden Füllbereich (10) aufweist, wobei die den Vorratsbehälter (6) verlassenden Knollen (K) zumindest einem der Legeaggregate (7) im jeweils rückseitigen Bereich zuführbar und hier von den Vereinzelungsorganen (8) übernehmbar sind, indem im Bereich der Legeaggregate (7) jeweils zumindest ein deren Rückseite zumindest bereichsweise umgebender Übernahmeraum (A) vorgesehen ist, in diesen mehrere der Knollen (K) zuführbar, diese Knollen (K) von den Vereinzelungsorganen (8) einzeln erfassbar und von diesen im Saatbeet (9) auslegbar sind, wobei der Vorratsbehälter (6) und der von einem Zwischenlagerbehälter (16) gebildete Übernahmeraum (A) durch eine Zuführbaugruppe (11) verbunden sind und zum Zuführen von Knollen (K) in den bzw. die rückseitigen Übernahmeraum(e) (A) des/der Legeaggregat(e) (7) zumindest ein horizontaler Förderer (12) vorgesehen ist, und wobei die aus Vorratsbehälter (6), Förderer (12) und Legeaggregat (7) mit Übernahmeraum (A) gebildete Einheit an einem Tragrahmen (2) vorgesehen ist, der wahlweise entweder mit einer Stützräder aufweisenden Zugbaugruppe an einem Schlepper (4) anhängbar ist oder bei einem am Heck eines Schleppers zu tragenden Aushebeaggregat an einer Dreipunkthalterung (3) des Schleppers (4) abstützbar sowie mittels eines hydraulischen Krafthebers (5) verlagerbar ist, **dadurch gekennzeichnet, dass** die Legeaggregate (7) dem Vorratsbehälter (6) nachgeordnet sind und in Querrichtung der Vorrichtung (1) ausgehend vom Vorratsbehälter (6) der jeweilige Förderer (12) zwischen zwei mit jeweiligen Teilbereichen eines Übernahmeraumes (A) zusammenwirkenden Legeaggregaten (7) angeordnet ist.

2. Kartoffellegevorrichtung nach Anspruch 1, **dadurch gekennzeichnet, dass** am Tragrahmen (2) vier Legeaggregate (7) mit zwei diesen zugeordneten Förderern (12) vorgesehen sind.

3. Kartoffellegevorrichtung nach Anspruch 1 oder 2, **dadurch gekennzeichnet, dass** ausgehend von der Gebrauchslage des Systems in Fahrtrichtung (F) gesehen sich das jeweilige Legeaggregat (7) mit seiner vertikalen Stützebene (S) im wesentlichen zwischen dem sich schlepperseitig erstreckenden Vorratsbehälter (6) sowie dem rückseitig dem Legeaggregat (7) zugeordneten Übernahmeraum (A) befindet.

4. Kartoffellegevorrichtung nach einem der Ansprüche 1 bis 3, **dadurch gekennzeichnet, dass** sich der Vorratsbehälter (6) im wesentlichen vor einem vom Legeaggregat (7) definierten Ablagepunkt (P) erstreckt.

5. Kartoffellegevorrichtung nacheinem der Ansprüche 1 bis 4, **dadurch gekennzeichnet, dass** die Zuführbaugruppe (11) eine rückseitige Trennwand (18) des Vorratsbehälters (6) durchgreift und im wesentlichen im Bereich einer oberen Öffnungszone (19) in den Übernahmeraum (A) geführt ist.

6. Kartoffellegevorrichtung nach einem der Ansprüche 1 bis 5, **dadurch gekennzeichnet, dass** die aus dem Übernahmeraum (A) mittels jeweiliger Becher-Förderer (8) übernommenen Knollen (K) beim Ablegen im Saatbeet (9) zumindest phasenweise eine entgegen der Fahrtrichtung (F) gerichtete Einlegbewegung (E) aufweisen.

7. Kartoffellegevorrichtung nach einem der Ansprüche 1 bis 6, **dadurch gekennzeichnet, dass** im Bereich der Legeaggregate (7) zumindest unterhalb des vorderseitigen Vorratsbehälters (6) jeweilige Bodenbearbeitungsgeräte (14, 15) vorgesehen sind.

8. Kartoffellegevorrichtung nach Anspruch 7, **dadurch gekennzeichnet, dass** deren Gebrauchslage und/oder der jeweilige Ablagepunkt (P) der Legeaggregate (7) mittels der bodenseitig steuerbaren Bearbeitungsgeräte (14, 15) einstellbar ist/sind.

9. Kartoffellegevorrichtung nach einem der Ansprüche 1 bis 8, **dadurch gekennzeichnet, dass** in die Bauteilkombination aus Vorratsbehälter (6), Förderer (12) und Legeaggregat (7) zumindest im Bereich des Förderers (12) ein die Förder- und Verlegebedingungen überwachender Sensor integrierbar ist.

10. Kartoffellegevorrichtung nach einem der Ansprüche 1 bis 9, **dadurch gekennzeichnet, dass** das zumindest eine Legeaggregat (7) und der Vorratsbehälter (6) an einem Querträger (20) eine zumindest bereichsweise eine vertikale Behälterwand (18) einschließende Hintereinanderanordnung definieren, der zumindest eine als Zwischenlager (16) nutzbare Übernahmeraum (A) am Legeaggregat (7) in Fahrtrichtung rückseitig an diesem vorgesehen ist und ein Auslassbereich (18') des Vorratsbehälters (6) mittels der Zuführbaugruppe (12) mit dem rückseitigen Übernahmeraum (A) zusammenwirkt, derart, dass zwischen dem Vorratsbehälter (6) und dem Übernahmeraum (A) eine zum Saatbeet verlaufende Zuführrichtung (E) mit einem Ablagepunkt (P) der Knollen (K) definiert ist.

## Claims

1. A potato positioning device having a support frame (2), on which at least one potato supply container (6) and positioning units (7) are provided, which units receive the tubers (K) from said container and discharge the same into respective prepared seed beds (9) and comprise a circulating cup belt or similar separating members (8), wherein the supply container (6) has a filling region (10), which extends in the direction of travel (F) of the tractor (4) substantially in front of the positioning units (7), wherein the tubers (K) leaving the supply container (6) may be conveyed to at least one of the positioning units (7) in the respective rear regions and may be received in this position by the separating members (8), in that, in the region of the positioning units (7), at least one receiving space (A) surrounding, at least partially, the rear side of said units is respectively provided, into which space a plurality of the tubers (K) may be conveyed, these tubers (K) may be individually grasped by the separating members (8) and may be laid therefrom in the seed bed (9), wherein the supply container (6) and the receiving space (A) comprised of an intermediate storage container (16) are connected by a conveyor assembly (11) and, for conveying the tubers (K) into the rear receiving space(s) (A) of the positioning unit(s) (7), at least one horizontal conveyor (12) is provided, and wherein the unit formed by the supply container (6), the conveyor (12) and the positioning unit (7) with the receiving space (A) is provided on a support frame (2), which may be optionally suspended to a traction assembly provided with supporting wheels on a tractor (4) or supported, on a lifting unit to be hauled at the rear of the tractor at a three-point mount (3) of the tractor (4) and which may be displaced by means of a hydraulic lifting device (5), **characterised in that** the positioning units (7) are positioned downstream of the supply container (6) and the relevant conveyor (12) is positioned, in the transverse direction of the device (1), starting from the supply container (6), between two positioning units (7) which interact with respective partial regions of a receiving space (A).

2. The potato positioning device according to claim 1, **characterised in that** four positioning units (7) with two associated conveyors (12) are provided on the support frame (2).

3. The potato positioning device according to either claim 1 or claim 2, **characterised in that**, starting from the operating position of the system, the relevant positioning unit (7) is located, in the direction of travel (F), with its vertical support plane (S) substantially between the supply container (6) extending on the tractor side and the receiving space (A), which is associated with the positioning unit (7) at the rear.

4. The potato positioning device according to any of claims 1 to 3, **characterised in that** the supply container (6) extends substantially in front of a dropping point (P) defined by the positioning unit (7).

5. The potato positioning device according to any of claims 1 to 4, **characterised in that** the conveyor assembly (11) passes through a rear separation wall (18) of the supply container (6) and is guided into the receiving space (A) substantially in the region of an upper opening zone (19).

6. The potato positioning device according to any of claims 1 to 5, **characterised in that** the tubers (K) received from the receiving space (A) by means of respective cup conveyors (8) have, at least in phases, a deposit motion (E) opposite to the direction of travel (F) when dropped into the seed bed (9).

7. The potato positioning device according to any of claims 1 to 6, **characterised in that** respective soil processing devices (14, 15) are provided in the region of the positioning units (7) at least below the frontal supply container (6).

8. The potato positioning device according to claim 7, **characterised in that** its operating position and/or the relevant dropping point (P) of the positioning units (7) is/are adjustable by means of the soil-side controllable processing devices (14, 15).

9. The potato positioning device; according to any of claims 1 to 8, **characterised in that** a sensor, which monitors the conveying and displacement conditions, may be integrated in the combination of components composed of the supply container (6), the conveyor (12) and the positioning unit (7), at least in the region of the conveyor (12).

10. The potato positioning device according to any of claims 1 to 9, **characterised in that** the at least one positioning unit (7) and the supply container (6) define on a transverse beam (20) a sequential arrangement enclosing, at least partially, a vertical container wall (18); the at least one receiving space (A), which may be used as an intermediate storage (16), is provided on the positioning unit (7) at the rear of the same in the direction of travel; and an output region (18') of the supply container (6) interacts with the rear receiving space (A) by means of the conveyor assembly (12) in such a way that a conveying direction (E) extending towards the seed bed, together with a dropping point (P) of the tubers (K), is defined between the supply container (6) and the receiving space (A).

## Revendications

1. Dispositif de plantation de pommes de terre comprenant un cadre porteur (2) sur lequel il est prévu au moins un réservoir de pommes de terre (6) et des unités de plantation (7) qui prennent les tubercules (K) dans ledit réservoir et les emportent jusque dans des parterres d'ensemencement préparées (9), les unités de plantation comportant une bande à godets en circulation ou des éléments de séparation analogues (8), le réservoir (6) comportant une région de remplissage (10) qui s'étend sensiblement en avant des unités de plantation (7) par référence au sens de déplacement (F) du tracteur (4), les tubercules (K) qui quittent le réservoir (6) pouvant être amenées à au moins une des unités de plantation (7) situées dans la région arrière et pouvant être prises ici par les éléments de séparation (8) en ce qu'au moins un espace de transfert (A) est prévu qui entoure au moins en partie le côté arrière desdites unités de plantation et dans lequel une pluralité de ces tubercules peut être amenée, en ce que ces tubercules (K) peuvent être saisies individuellement par les éléments de séparation et peuvent être étalées par ceux-ci dans le parterre d'ensemencement, le réservoir (6) et l'espacé de transfert (A) formé par un récipient de stockage intermédiaire (16) étant reliés par un module d'amenée (11) et au moins un transporteur horizontal (12) étant prévu pour amener les tubercules (K) dans l'au moins un espace de transfert arrière (A) de l'au moins une unité de plantation, et l'unité formée du réservoir (6), du transporteur (12) et de l'unité de plantation (17) pourvue de l'espace de transfert (A) étant prévue au niveau d'un cadre porteur (2) qui peut être attaché à un tracteur (4) au moyen d'un module de traction muni de roues support ou, dans le cas d'une unité relevable destinée à être portée à l'arrière d'un tracteur, peut être supporté par un support à trois points (3) du tracteur et être déplacé au moyen d'un vérin hydraulique (5), **caractérisé en ce que** les unités de plantation (7) sont disposées en aval du réservoir (6) et, dans la direction transversale du dispositif (1) à partir du réservoir (6), le transporteur respectif (12) est disposé entre deux unités de plantation (7) coopérant avec des régions partielles respectives d'une espace de transfert (A),

2. Dispositif de plantation de pommes de terre selon la revendication 1, **caractérisé en ce que** quatre unités de plantation (7), associées: à deux transporteurs (12), sont prévues au niveau du cadre support (2).

3. Dispositif de plantation de pommes de terre selon la revendication 1 ou 2, **caractérisé en ce que**, à partir de la position d'utilisation du système, vue dans le sens de déplacement (F), l'unité de plantation respective (7) est située, lorsque son plan de support (S) est vertical, sensiblement entre le réservoir (6) s'étendant côté tracteur et l'espace de transfert (A) associé à l'arrière à l'unité de plantation (7).

4. Dispositif de plantation de pommes de terre selon l'une des revendications 1 à 3, **caractérisé en ce que** le réservoir (6) s'étend sensiblement en avant d'un point de placement (P) défini par l'unité de plantation (7).

5. Dispositif de plantation de pommes de terre selon l'une des revendications 1 à 4, **caractérisé en ce que** le module d'amenée (11) s'engage à travers une paroi de séparation arrière (18) du réservoir (6) et est guidé jusque dans l'espace de transfert (A) sensiblement au niveau d'une zone d'ouverture supérieure (19).

6. Dispositif de plantation de pommes de terre selon l'une des revendications 1 à. 5, **caractérisé en ce que** les tubercules (K) transférés depuis l'espace de transfert (A) au moyen de transporteurs à godets respectifs (8) effectuent, lors de la plantation dans le parterre d'ensemencement (9), au moins par phases un mouvement d'insertion (E) opposé au sens de déplacement (F).

7. Dispositif de plantation de pommes de terre selon l'une des revendications 1 à 6, **caractérisé en ce que** des équipements de travail de sol respectifs (14, 15) sont prévus au niveau des unités de plantation (7) au moins au-dessous du réservoir avant (6).

8. Dispositif de plantation de pommes de terre selon la revendication 7, **caractérisé en ce que** la position d'utilisation de celui-ci et/ou le point de placement respectif (P) des unités de plantation (7) sont réglables au moyen des équipements de traitement commandables côté sol (14, 15) .

9. Dispositif de plantation de pommes de terre selon l'une des revendications 1 à 8 **caractérisé en ce que**, dans la combinaison formée du réservoir (6), du transporteur (12) et de l'unité de plantation (7), un capteur de surveillance de conditions de transport et de plantation peut être intégré au moins au niveau du transporteur (12).

10. Dispositif de plantation de pommes de terre selon l'une des revendications 1 à 9, **caractérisé en ce que** l'au moins une unité de plantation (7) et le réservoir (6) définissent au niveau d'une traverse (20) un agencement en série incluant au moins par endroit une paroi de récipient verticale (18), **en ce que** l'au moins un espace de transfert (A), utilisable comme récipient de stockage intermédiaire (16), est prévu au niveau de l'unité de plantation (7) à l'arriére par référence au sens de déplacement et **en ce qu'**une zone de sortie (18') du réservoir (6) coopère avec l'espace de transfert arrière (A) au moyen du module d'amenée (12) de manière à définir avec un point de placement (P) des tubercules (K), entre le réservoir (6) et l'espacé de transfert (A), une direction d'amenée s'étendant par rapport au parterre d'ensemencement.
